(19) Europäisches Patentamt
European Patent Office
Office européen des brevets

(11) **EP 1 960 320 B1**

(12) **FASCICULE DE BREVET EUROPEEN**

(45) Date de publication et mention de la délivrance du brevet:
**24.06.2015 Bulletin 2015/26**

(21) Numéro de dépôt: **06842130.4**

(22) Date de dépôt: **08.12.2006**

(51) Int Cl.:
*C04B 37/02* [(2006.01)]   *F01D 9/02* [(2006.01)]
*F02K 1/12* [(2006.01)]   *F02K 1/78* [(2006.01)]
*F23R 3/00* [(2006.01)]   *F02K 3/10* [(2006.01)]

(86) Numéro de dépôt international:
**PCT/FR2006/051319**

(87) Numéro de publication internationale:
**WO 2007/066053 (14.06.2007 Gazette 2007/24)**

(54) **ASSEMBLAGE PAR BRASAGE D'UNE PIECE METALLIQUE AVEC UNE PIECE EN MATERIAU CERAMIQUE**

HARTGELÖTETE VERBINDUNG ZWISCHEN EINEM METALLTEIL UND EINEM KERAMIKTEIL

BRAZED JOINT BETWEEN A METAL PART AND A CERAMIC PART

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.12.2005 FR 0553793**

(43) Date de publication de la demande:
**27.08.2008 Bulletin 2008/35**

(73) Titulaires:
• **SNECMA**
**75015 Paris (FR)**
• **Commissariat à l'Énergie Atomique et aux Énergies Alternatives**
**75015 Paris (FR)**

(72) Inventeurs:
• **BENOIT, Joël Michel**
**77240 Cesson La Forêt (FR)**

• **FROMENTIN, Jean-François**
**77240 Cesson La Forêt (FR)**
• **GILLIA, Olivier**
**38360 Sassenage (FR)**
• **REVIRAND, Pascal**
**38120 Saint Egrève (FR)**

(74) Mandataire: **Besnard, Christophe Laurent et al Cabinet Beau de Loménie**
**158, rue de l'Université**
**75340 Paris Cedex 07 (FR)**

(56) Documents cités:
EP-A- 0 480 470       JP-A- 59 156 976
JP-A- H05 315 463     US-A- 4 281 941
US-A- 4 410 285       US-A- 5 501 390

EP 1 960 320 B1

**Description**

Arrière-plan de l'invention

La présente invention se rapporte au domaine général des assemblages par brasage de deux matériaux présentant des propriétés thermomécaniques différentes.

Plus précisément, l'invention s'applique à l'assemblage par brasage d'une pièce métallique et d'une pièce en matériau céramique, par exemple à base de carbure de silicium (SiC) et/ou de carbone.

La pièce en matériau céramique peut être formée dé carbure de silicium massif. Elle peut aussi être constituée par un composite thermostructural et notamment par un composite à matrice céramique (CMC) renforcée par des fibres de carbone ou de carbure de silicium.

Les matériaux composites thermostructuraux sont caractérisés par des propriétés mécaniques les rendant aptes à constituer des pièces de structure tout en conservant ces propriétés mécaniques à des températures élevées. Ils sont constitués par un renfort de fibres densifié par une matrice en matériau réfractaire qui comble au moins partiellement la porosité du renfort fibreux. Le choix des matériaux pour les fibres et la céramique est typiquement dirigé parmi le carbone et les céramiques, (c'est à dire les matériaux ni métalliques ni organiques), en particulier le carbure de silicium (SiC).

L'invention pourra par exemple être utilisée pour assembler une pièce en matériau céramique à une pièce métallique en alliage de titane, d'aluminium et de vanadium (TA6V) ou en Inconel 718 (marque déposée), alliage à base de Nickel et de composition NiCr19Fe19Nb5Mo3.

Les propriétés mécaniques des pièces en matériau céramique et le fait que ces propriétés sont conservées à température élevée en font des matériaux de choix pour réaliser des pièces subissant d'importantes contraintes thermomécaniques, notamment dans les applications aéronautiques (pièces de moteur, éléments de carénage). Lorsque les matériaux céramiques sont renforcés par des fibres carbone ou carbure de silicium, ils constituent une alternative aux solutions métalliques, présentant de nombreux avantages notamment en terme de gain de masse et de durée de vie opérationnelle.

L'assemblage entre les pièces en matériau céramique et les métaux se fait classiquement par une liaison mécanique de type rivetage ou boulonnage, liaison parfois inadaptée pour des raisons d'encombrement, de difficultés de mise en oeuvre ou de poids.

D'autre part, les méthodes d'assemblage homogène des matériaux céramiques connues utilisant des précurseurs organiques céramiques ne sont pas adaptées aux assemblages hétérogènes matériau céramique/métal.

Par ailleurs, les techniques connues de brasage utilisées pour des liaisons homogènes entre deux matériaux céramiques peuvent difficilement être utilisées pour un brasage hétérogène matériau céramique sur métal en raison des comportements thermomécaniques et chimiques très différents des matériaux céramiques et des métaux.

En effet, un alliage métallique à base de titane, d'aluminium et de vanadium présente un coefficient de dilatation environ deux à trois fois supérieur à celui des matériaux céramiques.

Plus précisément, le coefficient de dilatation d'un tel alliage est, à 500°C, de l'ordre de $10 \cdot 10^{-6}$ $K^{-1} \pm 15\%$, et celui d'un CMC, de l'ordre de $2,5.10^{-6}$ à $4,0.10^{-6}$ $K^{-1} \pm 15\%$.

Ainsi, pour un assemblage de 30 mm, on observe un décalage de dilatation de 0,2 mm lors du refroidissement de la température de solidification de la brasure à la température ambiante de cet assemblage.

Un tel décalage engendre l'apparition de fortes contraintes dans les deux pièces et notamment des efforts en compression, respectivement en traction, dans les zones adjacentes à la brasure de la céramique, respectivement de la pièce métallique. Ces contraintes peuvent entraîner des déformations locales susceptibles de mener à la rupture de l'une des pièces ou à une moindre résistance de la brasure.

De telles déformations sont irréversibles dans la pièce métallique. Dans la pièce céramique, notamment dans un composite CMC, ces déformations peuvent mener à une rupture de type fragile. Cette rupture peut être soudaine si la contrainte est trop forte. La rupture peut aussi se produire, après des endommagements successifs sous sollicitation cyclique.

Une autre technique d'assemblage connue est décrite dans le brevet US n° 5501390. Le document JPH05315463 A décrit un assemblage comportant une pièce métallique et une pièce céramique. Ces pièces sont liées par un élément intercalaire de liaison. Cet élément de liaison est constitué d'une nappe déformable contenant des zones en méplat brasée à la pièce céramique et à la pièce métallique. La fonction de cette couche intermédiaire est de réduire les tensions mécaniques du joint entre la pièce métallique et la pièce céramique. La zone déformable présente trois ondulations libres.

Objet et résumé de l'invention

La présente invention a donc pour but principal de pallier de tels inconvénients en proposant un assemblage tel que défini dans la revendication 1 annexée. Un tel assemblage comporte une pièce métallique, une pièce en matériau céramique et au moins un élément intercalaire de liaison assemblé par brasage à chacune de ces pièces, cet élément intercalaire de liaison étant constitué d'une nappe déformable présentant des zones en méplat brasées et des zones déformables.

Une brasure de type Ag-Mn ou Ag-Cu-Ti peut par exemple être choisie, ce qui permet d'obtenir un assemblage résistant à de hautes températures atteignant 500°C.

Conformément à l'invention, le différentiel de dilatation entre la pièce en matériau céramique et le métal est absorbé par la nappe déformable.

L'assemblage présente donc une adaptation thermomécanique aux différentiels de dilatation tout en restant au maximum dans le domaine élastique. Pour résister au refroidissement lors du brasage et au cyclage thermique en fonctionnement, il est nécessaire d'accommoder le différentiel de dilatation entre la pièce en matériau céramique et la pièce métallique.

Dans un mode préféré de réalisation, la pièce en matériau céramique est à base de carbure de silicium et/ou de carbone.

Par exemple, la pièce en matériau céramique est formée de carbure de silicium massif.

Dans un autre mode de réalisation, la pièce en matériau céramique comporte une matrice céramique renforcée par des fibres de carbone ou de carbure de silicium.

La nappe déformable comporte au moins deux ondulations déformables libres orientées alternativement vers la pièce métallique et vers la pièce en matériau céramique.

De telles ondulations libres garantissent une souplesse accrue de la liaison par brasure.

La hauteur de cette ondulation libre peut avantageusement être utilisée pour moduler la rigidité selon la direction de pliure.

Dans une première variante de réalisation, les ondulations déformables sont concentriques.

Dans un mode de réalisation de cette première variante, l'élément intercalaire de liaison comporte une première zone en méplat sensiblement circulaire autour d'un axe, une deuxième zone en méplat sensiblement annulaire, coaxiale à la première zone en méplat, et de diamètre intérieur supérieur au diamètre de cette première zone, et des ondulations présentant une symétrie de révolution par rapport à l'axe précité.

Grâce à cette symétrie, un tel élément de liaison présente un comportement identique quelle que soit la direction de la ligne de plus grande contrainte.

Dans une autre variante de réalisation, l'élément de liaison a la forme générale d'un ruban replié en accordéon.

Selon une mise en oeuvre avantageuse de l'invention, l'assemblage comporte une pluralité d'éléments intercalaires de liaison agencés radialement autour d'un point fixe.

Avec un tel élément de liaison, les contraintes sont faibles au niveau des brasures et la rigidité peut être modulée.

La disposition radiale en étoile des éléments intercalaires de liaison présente avantageusement des ondulations concentriques avec un découpage radial (ce découpage étant constitué par des intervalles libres selon plusieurs directions radiales), ce qui permet de réduire ou faire disparaître les contraintes tangentielles de tels cercles concentriques.

Préférentiellement, les éléments intercalaires de liaison sont agencés selon plusieurs directions radiales autour du point fixe.

Une telle mise en oeuvre permet d'augmenter la rigidité de l'assemblage entre la pièce en matériau céramique et la pièce métallique.

Autour de ce point fixe ainsi défini, le décalage dû à la dilatation de la pièce métallique augmente avec l'éloignement au point fixe.

Selon une réalisation particulière de cette mise en oeuvre, les éléments intercalaires de liaison sont de plus en plus souples quand on s'éloigne du point fixe.

Une telle réalisation permet de compenser l'augmentation du décalage précité.

L'invention vise aussi une tuyère de turbomachine comportant au moins un assemblage tel que mentionné ci-dessus dans lequel la pièce métallique est un carter de cette tuyère (ou un levier) et la pièce en matériau céramique est un volet de cette tuyère.

L'invention vise aussi une chambre de combustion de turbomachine comportant au moins un assemblage tel que mentionné ci-dessus dans lequel la pièce métallique est un carter (ou un joint - c'est à dire un élément de liaison - ou une pièce) de cette chambre et la pièce en matériau céramique une pièce constitutive de cette chambre.

L'invention vise aussi un équipement de post-combustion d'une de turbomachine comportant au moins un assemblage tel que mentionné ci-dessus dans lequel la pièce métallique est un carter de post-combustion (ou une plateforme d'équipement de post-combustion) et la pièce en matériau céramique est un bras accroche-flammes.

L'invention vise aussi une turbomachine comportant au moins un assemblage tel que mentionné ci-dessus.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 représente un élément de liaison pouvant être utilisé dans un premier assemblage;
- la figure 2 représente une section d'un assemblage utilisant la pièce de liaison de la figure 1 ;
- la figure 3 représente un élément de liaison pouvant être utilisé dans un deuxième assemblage conforme à l'invention ;
- la figure 4 représente un élément de liaison pouvant être utilisé dans un troisième assemblage conforme à l'invention ;
- la figure 5 représente une section partielle des éléments de liaison des figures 3 et 4 ;
- la figure 6 représente une surface ondulée à partir de laquelle sont obtenus des éléments intercalaires de liaison selon le mode de réalisation de la figure 5 ;
- la figure 7 représente une mise en oeuvre avantageuse de l'invention ;
- la figure 8 représente une réalisation particulière d'une pièce sur laquelle sont aménagés des évidements pour faciliter le positionnement et ancrer des éléments de liaison afin d'être assemblée selon l'invention ; et
- les figures 9a et 9b représentent des courbes de propriétés mécaniques en fonction de la température pour des matériaux susceptibles d'être utilisés pour réaliser des éléments intercalaires, respectivement ductiles et déformables de manière réversible.

Description détaillée de plusieurs modes de réalisation

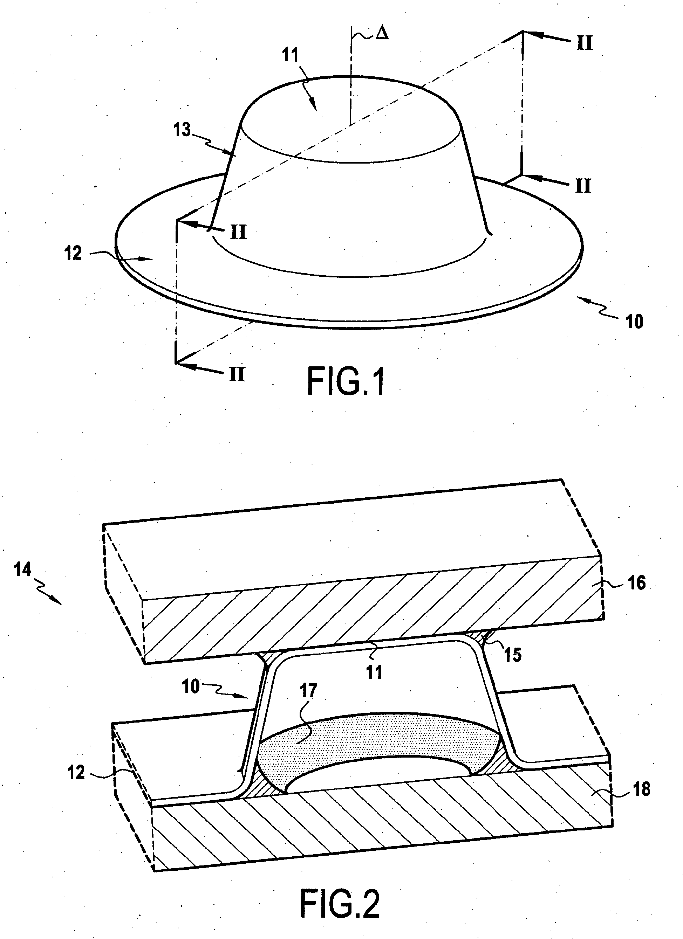

La figure 1 représente un élément de liaison 10 pouvant être utilisé dans un premier assemblage non revendiqué. Il est par exemple constitué d'un matériau déformable plan embouti de manière à former une première zone en méplat 11 circulaire autour d'un axe $\Delta$ et une deuxième zone en méplat 12 annulaire autour de cet axe $\Delta$, ces deux zones étant reliées par une zone déformable 13 formant sensiblement un tronc de cône. Le diamètre intérieur de la zone annulaire 12 est supérieur au diamètre de la zone circulaire 11. Les parois sensiblement coniques 13 peuvent présenter une plus ou moins grande inclinaison par rapport à la direction perpendiculaire aux zones en méplat 11 et 12.

La figure 2 représente une section II-II (voir figure 1) d'un assemblage 14 réalisé à l'aide d'un élément de liaison 10 présenté sur la figure 1.

Dans cet assemblage, une première brasure 15 est réalisée entre une pièce en métal 16 et la zone en méplat circulaire 11 de l'élément de liaison 10. Une seconde brasure 17, préférentiellement de la même composition, est réalisée entre une pièce 18 en matériau céramique, un CMC par exemple, et la zone en méplat annulaire 12 de l'élément de liaison 10.

L'élément de liaison 10 présenté et utilisé sur les figures 1 et 2 peut être obtenu à partir d'une plaque de matériau déformable par découpe et emboutissage à l'aide d'un élément d'emboutissage sensiblement cylindrique.

Un encombrement en hauteur, et donc une taille en hauteur de l'élément de liaison, d'environ 2 mm est adapté aux applications aéronautiques mais on comprend que cette taille peut être modifiée en fonction des besoins propres à des applications différentes. Les proportions des différentes parties de l'élément de liaison 10 peuvent également être modifiées en fonction de l'application visée.

On note à ce sujet que la modification de tels paramètres géométriques de l'élément de liaison 10 permet de modifier l'importance des contraintes observées.

La taille de 2 mm proposée permet d'obtenir une flexibilité dans le sens tangentiel pour des pièces dont la taille est de l'ordre de la dizaine de centimètres. Sous l'effet d'un différentiel de dilatation, par exemple lors d'un cycle thermique, la partie conique 13 de l'élément de liaison 10 peut absorber ce différentiel totalement ou partiellement sans causer de préjudice à la solidité de l'assemblage. En effet, comme le matériau à partir duquel est réalisé l'élément de liaison est déformable, la déformation de la partie cylindrique est sans conséquence sur l'assemblage dans son ensemble.

Cependant, dans le mode de réalisation de l'assemblage présenté sur la figure 2, des contraintes importantes peuvent être observées au niveau des brasures et en cisaillement de membrane dans l'élément de liaison.

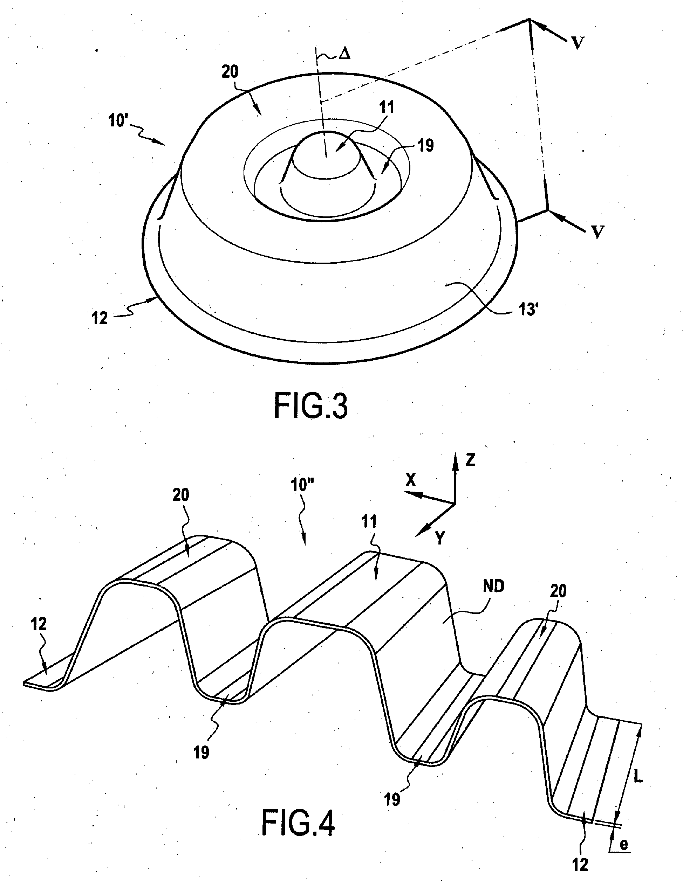

L'élément de liaison 10' qui va maintenant être décrit en référence à la figure 3 permet de pallier cet inconvénient.

Cet élément de liaison 10' comporte une zone déformable 13' axisymétrique autour d'un axe $\Delta$, cette zone 13' étant conformée de manière à comporter au moins deux ondulations libres 19 et 20 orientées alternativement vers le haut et vers le bas par rapport à des zones en méplat 11 et 12 respectivement circulaire et annulaire autour de l'axe $\Delta$. Il s'agit toujours avantageusement d'une structure en matériau déformable emboutie. La présence des ondulations libres, c'est-à-dire non brasées, sur la zone déformable 13' assouplit la structure.

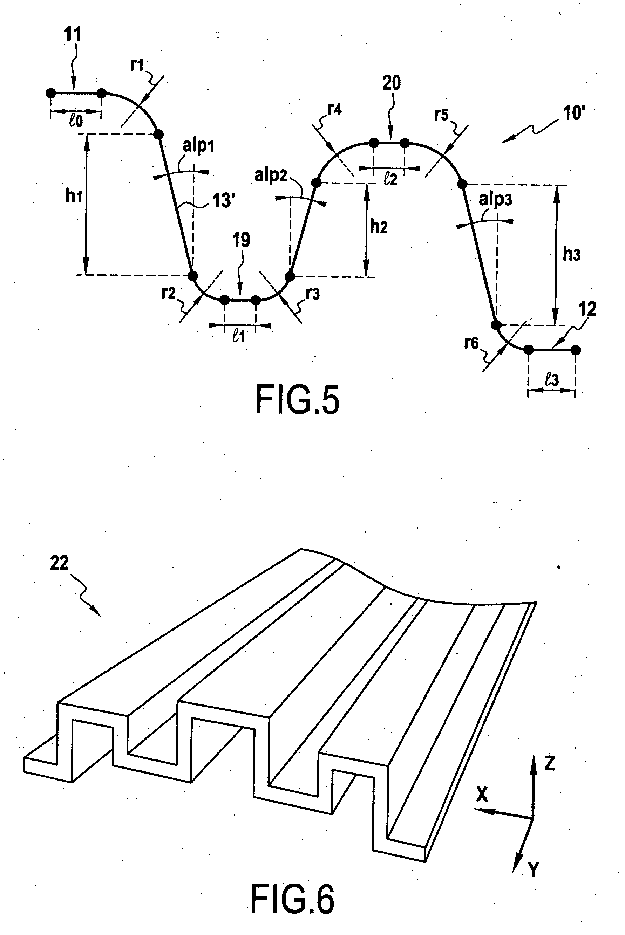

Sur la figure 5, une section V-V (voir figure 3) de l'élément de liaison 10' est représentée. Les zones en méplat 11 et 12 sont reliées par la zone déformable 13' présentant les deux ondulations libres 19 et 20.

On note que, sur les figures 3 et 5, les ondulations 19, 20 sont représentées comme étant sensiblement plates mais peuvent également présenter d'autres formes, par exemple sinusoïdales.

Des considérations de taille, d'encombrement, de proportion similaires à celles présentées pour l'élément de liaison présenté sur la figure 1 s'appliquent également pour celui de la figure 3.

On note donc que des modifications de l'épaisseur de la nappe emboutie, des rayons de courbure r1, r2, r3, r4, r5, r6 des ondulations, des dimensions l1, l2 des ondulations, des hauteurs h1, h2 et h3 caractérisant les ondulations 19, 20, des angles alp1, alp2, alp3 réalisés par les ondulations par rapport à la perpendiculaire aux zones en méplat, des tailles 10, 13 de ces zones en méplat sont à envisager et sont autant de paramètres pour affiner les contraintes et les propriétés de rigidité.

Dans les modes de réalisation des figures 1 et 3, la rigidité de l'assemblage obtenu en cisaillement présente l'avantage d'être isotrope dans le plan de l'assemblage.

Les contraintes en cisaillement observées au niveau des brasures dans un assemblage utilisant un élément de liaison ayant les caractéristiques présentées sur la figure 3 sont moindres par rapport à celles observées dans un assemblage utilisant un élément de liaison selon la figure 1.

La figure 4 présente un élément de liaison 10" pouvant être utilisé dans un autre assemblage conforme à l'invention. Selon ce mode, l'élément de liaison 10" a la forme générale d'un ruban replié en accordéon. Dans l'exemple décrit sur la figure 4, la section du ruban est la même que celle présentée sur la figure 5. Un tel élément de liaison peut encore être une structure emboutie ou avantageusement être obtenu par pliage ou par extrusion en ligne droite selon la direction Y. Dans ce dernier cas, ainsi que représenté sur la figure 6, une surface ondulée 22 s'étendant selon la direction Y est obtenue.

Les éléments de liaison 10" sont ensuite découpés tous les L millimètres dans cette surface ondulée 22.

Un usinage, par exemple au fil, d'une pièce métallique, comme l'inconel 718 est également envisageable.

L'élément intercalaire 10" selon ce mode de réalisation a une direction privilégiée de déformation suivant X (rigidité tangentielle) et une direction rigide suivant Y (rigidité transversale).

Les contraintes observées au niveau des brasures dans ce mode de réalisation sont faibles. L'assemblage obtenu présente alors une rigidité plus faible que celle observée dans les autres modes de réalisation basés sur un élément de liaison axisymétrique 10 et 10', tel que représenté aux figures 1 et 3.

Les paramètres géométriques du ruban peuvent être modifiés afin d'obtenir la plus faible contrainte maximale au niveau des brasures et dans la structure elle-même pour la plus faible rigidité tangentielle (c'est-à-dire dans la direction X) et la plus grande rigidité normale (dans la direction Z).

Ainsi, on peut modifier l'épaisseur e du ruban, les rayons de courbure r1, r2, r3, r4, r5, r6 des ondulations, les dimensions l1, l2 des ondulations, les hauteurs h1, h2 et h3 des ondulations, les angles alp1, alp2, alp3 réalisés par les ondulations par rapport à la perpendiculaire aux zones en méplat et les dimensions des zones en méplat 10, 13.

Les trois hauteurs h1, h2, h3 caractérisent les deux ondulations libres, 19, 20 de la zone déformable 13'. Ces première, deuxième et troisième hauteurs, h1, h2, h3 correspondent, comme représenté sur la figure 5, aux hauteurs des portions de ruban de profil (sensiblement) rectiligne s'étendant, respectivement, entre la première zone en méplat 11 et le sommet de l'ondulation 19, entre le sommet de l'ondulation 19 et le sommet de l'ondulation 20, et entre le sommet de l'ondulation 20 et la deuxième zone en méplat 12.

L'homme du métier comprendra que la hauteur h2 est choisie inférieure ou égale à la hauteur h1.

Cependant il est avantageux de prendre également en compte les rayons de courbure minimum des ondulations libres. La valeur de h2 est alors avantageusement choisie supérieure ou égale à 1/3 de h1.

Dans l'exemple décrit ici, les valeurs choisies et proposées sont limitées à quelques dixièmes de mm car on impose que la liaison entre les pièces assemblées ne dépasse pas 2 mm. Cela dit, plus h1 et h2 sont grands, plus les déformations sont réparties et moins il y a de contraintes.

Le tableau ci-dessous présente un exemple de jeu de paramètres géométriques permettant d'obtenir un bon compromis entre contrainte maximum et rigidité avec ruban réalisé dans un alliage d'Inconel 718 (dénomination commerciale).

| e | H1 | h2 | h3 | alp1-alp3 | l1-l3 | r1-r6 | l0 |
|---|---|---|---|---|---|---|---|
| 0.4 mm | 0.3 mm | 0.1 mm | 0.3 mm | 5° | 0.5 mm | 0.75 mm | 1.0 mm |

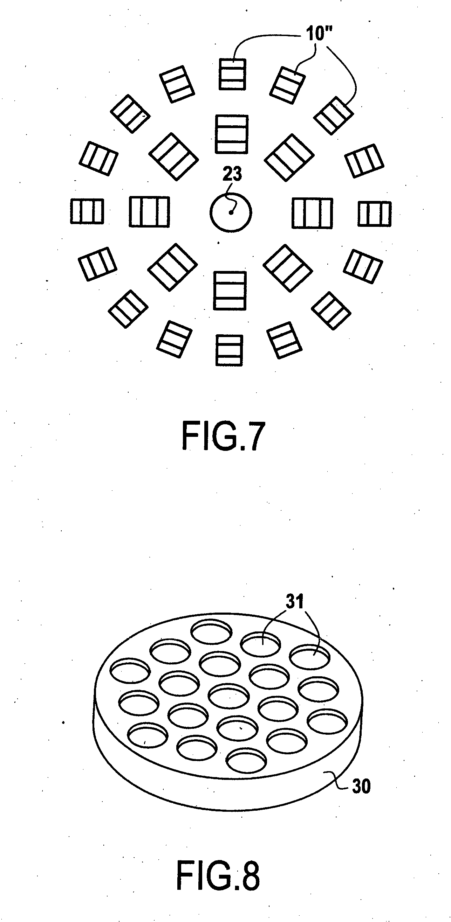

Pour augmenter la rigidité en cisaillement parallèle au plan de l'assemblage, une pluralité d'éléments intercalaires de liaison 10" sont agencées radialement autour d'un point fixe 23 ainsi que représenté sur la figure 7.

Dans ce mode de réalisation, les nappes déformables sont dirigées vers le point fixe 23. En disposant les éléments de liaison 10" de manière concentrique, le déplacement relatif nul des pièces assemblées est alors forcé sur le point central 23 de l'arrangement concentrique. On rigidifie ainsi l'assemblage dans le plan d'assemblage. On peut disposer les éléments intercalaires 10" de manière à ce que leurs directions de déformation propres soient tournées vers le point fixe 23.

Cette disposition pallie le manque de rigidité dans le sens tangentiel. La déformation relative lors du refroidissement des deux pièces à assembler est orientée alors vers le centre de l'assemblage qui est le point fixe 23, ne subissant pas de mouvement relatif des deux pièces à assembler. La déformation due au différentiel de dilatation est alors absorbée de manière concentrique. La rigidité globale est obtenue grâce à la plus grande rigidité des structures dans le sens perpendiculaire à la direction de déformation privilégiée.

En outre étant donné qu'au point fixe, le déplacement relatif des pièces à assembler est nul et qu'il croît jusqu'en périphérie, il est judicieux de placer des structures de plus en plus souples au fur et à mesure qu'on s'éloigne du point fixe. Cela permet de gagner en rigidité tangentielle dans la zone du point fixe.

La figure 8 illustre une réalisation particulière d'une pièce 30 d'assemblage dans laquelle sont aménagées des évidements ou cavités 31 permettant de positionner des éléments intercalaires de liaison 10" selon une disposition en étoile correspondant à celle représentée à la figure 7.

Cet agencement permet d'ancrer les éléments intercalaires de liaison 10" dans la pièce 30 qui est préférentiellement la pièce en métal ou éventuellement la pièce en matériau céramique.

La mise en oeuvre de l'invention nécessite un choix de matériau qui reste dans le domaine élastique pour réaliser l'élément intercalaire. Il est également important de fabriquer le ou les éléments intercalaires de liaison dans le matériau le plus résistant possible pour avoir une plus grande latitude d'affaiblissement mécanique c'est-à-dire de gain en souplesse.

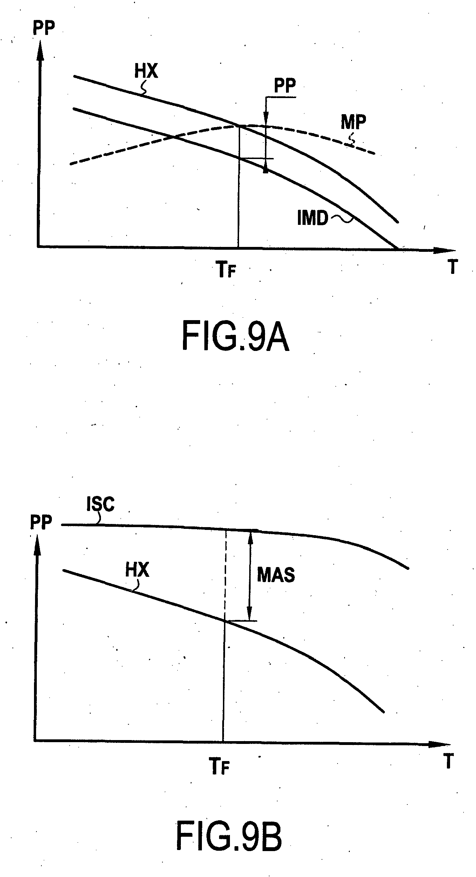

Les figures 9a et 9b illustrent des propriétés à prendre en compte pour le choix du matériau de l'élément intercalaire. Sur la figure 9a, la courbe IMD des propriétés mécaniques d'un élément intercalaire de liaison massif ductile est représentée en comparaison avec celle HX de la pièce en métal à assembler. On observe une perte de propriétés mécaniques PP (limite élastique, résistance à la rupture).

La courbe MP représente les propriétés mécaniques potentiellement idéales d'un élément intercalaire de liaison pour un brasage à température $T_S$ correspondant à la température de solidification de la brasure.

En effet, en dessous de cette température de solidification $T_S$, l'élément intercalaire doit idéalement avoir des propriétés moindres que la pièce en métal à assembler (HX) afin qu'il puisse jouer son rôle de matériau ductile. Il doit également avoir au moins des propriétés de résistance suffisantes à une température de fonctionnement $T_F$, la température de fonctionnement $T_F$ étant de façon empirique de l'ordre des 2/3 de la température de solidification $T_S$ précitée, en degrés Celsius, ce qui se traduit par :

$$T_S = \frac{3}{2} T_F \text{ où } T_S \text{ et } T_F \text{ sont exprimées en degrés Celsius.}$$

Or, l'homme du métier sait que ces impératifs, représentés par la courbe MP, ne sont pas réalisables avec un élément intercalaire ductile massif. Pour pallier la perte de propriétés PP observée avec ce matériau, il est nécessaire de surdimensionner l'assemblage.

La figure 9b représente une courbe ISC des propriétés mécaniques d'un matériau pour élément intercalaire de liaison déformable pouvant être avantageusement utilisé dans l'invention. Il s'agit d'une courbe correspondant à un matériau très réfractaire (par exemple, alliages à base de Fer, Nickel, Chrome, Aluminium, Titane) dont les propriétés mécaniques sont peu dégradées en température de fonctionnement élevée.

Au lieu d'observer une perte de propriété PP ainsi que sur la figure 9a, on observe une marge d'affaiblissement structural MAS. Cette marge est contrôlable et est utilisée pour assouplir la structure à volonté.

Les éléments intercalaires de liaison déformables peuvent encore se présenter sous la forme de tôle ondulée à une dimension (1D), de tôle emboutie voire de tôle ondulée à deux dimensions entrecroisées (2D).

A titre d'exemple les matériaux pour la réalisation de ces structures peuvent être choisis dans la liste suivante : tôle ondulée 1D en alliage à base de FeCrAlY, tôle ondulée selon deux dimensions (2D) en Haynes 230 (tôle emboutie), tôles ondulées 2D entrecroisées en Nimonic 75 (rubans ondulés à une dimension insérés et brasés dans les creux d'ondulation d'une tôle ondulée selon une dimension - réalisation non représentée).

De telles structures peuvent être utilisées notamment pour assembler des pièces en matériau céramique à base de SiC avec des pièces métalliques à base d'alliage en inconel 718 ou en TA6V, cette liste n'étant pas limitative.

**Revendications**

**1.** Assemblage (14) comportant une pièce métallique (16), une pièce (18) en matériau céramique, cet assemblage étant **caractérisé en ce que** et au moins un élément intercalaire de liaison (10', 10") assemblé par brasage à chacune desdites pièces (16, 18), cet assemblage étant **caractérisé en ce que** ledit élément intercalaire de liaison est constitué d'une nappe déformable présentant au moins deux zones en méplat (11, 12) brasées respectivement auxdites pièces (16, 18), ces deux zones en méplat (11, 12) étant reliées entre elles par une zone déformable (13') présentant au moins deux ondulations libres (19, 20), c'est à dire non brasées, orientées alternativement vers ladite pièce métallique (16) et vers ladite pièce en matériau céramique (18).

2. Assemblage selon la revendication 1, dans lequel ladite pièce (18) en matériau céramique est à base de carbure de silicium et/ou de carbone.

3. Assemblage selon la revendication 2, dans lequel ladite pièce en matériau céramique (18) est formée de carbure de silicium massif.

4. Assemblage selon la revendication 2, dans lequel ladite pièce en matériau céramique (18) comporte une matrice céramique renforcée par des fibres de carbone ou de carbure de silicium.

5. Assemblage selon l'une quelconque des revendications 1 à 4, dans lequel ladite zone déformable (13') présente deux ondulations libres (19, 20) **caractérisées par** trois hauteurs (h1, h2, h3), ces trois hauteurs étant telles que la valeur de la deuxième hauteur (h2) est supérieure ou égale à 1/3 de la première hauteur (h1).

6. Assemblage selon l'une quelconque des revendications 1 à 5, dans lequel lesdites ondulations libres (19, 20) sont concentriques.

7. Assemblage selon l'une quelconque des revendications 1 à 6, dans lequel ledit élément intercalaire de liaison (10') comporte une première zone en méplat (11) sensiblement circulaire autour d'un axe (Δ), une deuxième zone en méplat (12) sensiblement annulaire, coaxiale à ladite première zone, et de diamètre intérieur supérieur au diamètre de ladite première zone, et des ondulations libres présentant une symétrie de révolution par rapport audit axe (Δ).

8. Assemblage selon l'une quelconque des revendications 1 à 5, dans lequel ledit élément intercalaire de liaison (10") a la forme générale d'un ruban replié en accordéon, selon une direction principale (X).

9. Assemblage selon la revendication 8, dans lequel une pluralité d'éléments intercalaires de liaison (10") sont agencés radicalement autour d'un point fixe (23).

10. Assemblage selon la revendication 9, dans lequel lesdits éléments intercalaires de liaison (10") sont agencés de sorte que leurs dites directions principales (X) sont alignées suivant plusieurs directions radiales autour dudit point fixe (23).

11. Assemblage selon la revendication 9 ou 10, dans lequel la pluralité d'éléments intercalaires de liaison est telle que les éléments intercalaires (10") sont de plus en plus souples quand on s'éloigne dudit point fixe (23).

12. Tuyère de turbomachine comportant au moins un assemblage selon l'une quelconque des revendications 1 à 11, dans lequel ladite pièce métallique (16) est un carter de ladite tuyère et ladite pièce en matériau céramique (18) est un volet de ladite tuyère.

13. Chambre de combustion de turbomachine comportant au moins un assemblage selon l'une quelconque des revendications 1 à 11, dans lequel ladite pièce métallique (16) est un carter de ladite chambre et ladite pièce en matériau céramique (18) une pièce constitutive de ladite chambre.

14. Equipement de post-combustion d'une de turbomachine comportant au moins un assemblage selon l'une quelconque des revendications 1 à 11, dans lequel ladite pièce métallique (16) est un carter de post-combustion et ladite pièce en matériau céramique (18) est un bras accroche-flammes.

15. Turbomachine comportant au moins un assemblage selon l'une quelconque des revendications 1 à 11.

**Patentansprüche**

1. Anordnung (14), umfassend ein Metallteil (16), ein Teil (18) aus Keramikwerkstoff und wenigstens ein Verbindungszwischenelement (10', 10"), das mit jedem der Teile (16, 18) verlötet ist, wobei diese Anordnung **dadurch gekenn-**

**zeichnet ist, dass** das Verbindungszwischenelement von einer verformbaren Lage gebildet ist, die wenigstens zwei abgeflachte Bereiche (11, 12), welche an die Teile (16 bzw. 18) gelötet sind, aufweist, wobei diese beiden abgeflachten Bereiche (11, 12) durch einen verformbaren Bereich (13'), der wenigstens zwei freie, das heißt nicht gelötete Wellen (19, 20) aufweist, welche abwechselnd in Richtung des Metallteils (16) und in Richtung des Keramikwerkstoffteils (18) gerichtet sind, miteinander verbunden sind.

2. Anordnung nach Anspruch 1, wobei das Teil (18) aus Keramikwerkstoff auf der Basis von Siliziumkarbid und/oder von Kohlenstoff ist.

3. Anordnung nach Anspruch 2, wobei das Keramikwerkstoffteil (18) aus massivem Siliziumkarbid gebildet ist.

4. Anordnung nach Anspruch 2, wobei das Keramikwerkstoffteil (18) eine durch Kohlenstoff- oder Siliziumkarbidfasern verstärkte Keramikmatrix umfasst.

5. Anordnung nach einem der Ansprüche 1 bis 4, wobei der verformbare Bereich (13') zwei freie Wellen (19, 20), die durch drei Höhen (h1, h2, h3) gekennzeichnet sind, aufweist, wobei diese drei Höhen derart sind, dass der Wert der zweiten Höhe (h2) größer als oder gleich 1/3 der ersten Höhe (h1) ist.

6. Anordnung nach einem der Ansprüche 1 bis 5, wobei die freien Wellen (19, 20) konzentrisch sind.

7. Anordnung nach einem der Ansprüche 1 bis 6, wobei das Verbindungszwischenelement (10') einen um eine Achse (Δ) im Wesentlichen kreisförmigen ersten abgeflachten Bereich (11), einen im wesentlichen ringförmigen zweiten abgeflachten Bereich (12), der zu dem ersten Bereich koaxial ist und einen Innendurchmesser aufweist, welcher größer als der Durchmesser des ersten Bereichs ist, sowie freie Wellen, die eine Rotationssymmetrie in Bezug auf die Achse (Δ) aufweisen, umfasst.

8. Anordnung nach einem der Ansprüche 1 bis 5, wobei das Verbindungszwischenelement (10") die allgemeine Form eines in einer Hauptrichtung (X) ziehharmonikaförmig gebogenen Bandes aufweist.

9. Anordnung nach Anspruch 8, wobei eine Vielzahl von Verbindungszwischenelementen (10") radial um einen Festpunkt (23) herum angeordnet ist.

10. Anordnung nach Anspruch 9, wobei die Verbindungszwischenelemente (10") derart angeordnet sind, dass ihre Hauptrichtungen (X) entlang mehrerer radialer Richtungen um den Festpunkt (23) herum fluchten.

11. Anordnung nach Anspruch 9 oder 10, wobei die Vielzahl von Verbindungszwischenelementen derart ist, dass die Zwischenelemente (10") mit der Entfernung von dem Festpunkt (23) immer flexibler sind.

12. Düse einer Turbomaschine, umfassend wenigstens eine Anordnung nach einem der Ansprüche 1 bis 11, wobei das Metallteil (16) ein Gehäuse der Düse ist und das Keramikwerkstoffteil (18) eine Klappe der Düse ist.

13. Brennkammer einer Turbomaschine, umfassend wenigstens eine Anordnung nach einem der Ansprüche 1 bis 11, wobei das Metallteil (16) ein Gehäuse der Kammer ist und das Keramikwerkstoffteil (18) ein Bestandteil der Kammer ist.

14. Nachverbrennungseinrichtung einer Turbomaschine, umfassend wenigstens eine Anordnung nach einem der Ansprüche 1 bis 11, wobei das Metallteil (16) ein Nachverbrennungsgehäuse ist und das Keramikwerkstoffteil (18) ein Flammenhalterarm ist.

15. Turbomaschine, die wenigstens eine Anordnung nach einem der Ansprüche 1 bis 11 umfasst.


**Claims**

1. An assembly (14) comprising a metal piece (16), a piece (18) made of ceramic material and at least one intermediate connection element (10', 10") assembled to each of said pieces (16, 18) by brazing, this assembly being **characterized in that** said intermediate connection element is constituted by a deformable sheet presenting at least two flat zones (11, 12) brazed respectively to said pieces (16, 18), these two flat zones (11, 12) being interconnected by a deformable zone (13') presenting at least two free, that is non-brazed, undulations (19, 20) oriented in alternation towards said metal piece (16) and towards said piece (18) made of ceramic material.

2. An assembly according to claim 1, in which said piece (18) made of ceramic material is based on silicon carbide and/or carbon.

3. An assembly according to claim 2, in which said piece (18) made of ceramic material is made of solid silicon carbide.

4. An assembly according to claim 2, in which said piece (18) made of ceramic material comprises a ceramic matrix reinforced by carbon or silicon carbide.

5. An assembly according to any one of claims 1 to 4, in which said deformable zone (13') presents two free undulations (19, 20) **characterized by** three heights (h1, h2, h3), these three heights being such that the value of the second height (h2) is greater than or equal to 1/3 of the value of the first height (h1).

6. An assembly according to any one of claims 1 to 5, in which said free undulations (19, 20) are concentric.

7. An assembly according to any one of claims 1 to 6, in which said intermediate connection element (10') comprises a first flat zone (11) that is substantially circular about an axis ($\Delta$), a second flat zone (12) that is substantially annular, coaxial about said first zone, and of inside diameter greater than the diameter of said first zone, and free undulations presenting symmetry of revolution about said axis ($\Delta$).

8. An assembly according to any one of claims 1 to 5, in which said intermediate connection element (10") is generally in the form of a tape that is concertina-folded in a main direction (X).

9. An assembly according to claim 8, in which a plurality of intermediate connection elements (10") are arranged radially around a fixed point (23).

10. An assembly according to claim 9, in which said intermediate connection elements (10") are arranged in such a manner that their main directions (X) are in alignment on a plurality of radial directions about said fixed point (23).

11. An assembly according to claim 9 or claim 10, in which the plurality of intermediate connection elements is such that the intermediate elements (10") are of increasing flexibility on going away from said fixed point (23).

12. A turbomachine nozzle including at least one assembly according to any one of claims 1 to 11, in which said metal piece (16) is a casing of said nozzle and said piece (18) made of ceramic material is a flap of said nozzle.

13. A turbomachine combustion chamber including at least one assembly according to any one of claims 1 to 11, in which said metal piece (16) is a casing of said chamber and said piece (18) made of ceramic material is a component part of said chamber.

14. Post-combustion equipment of a turbomachine including at least one assembly according to any one of claims 1 to 11, in which said metal piece (16) is a post-combustion casing and said piece (18) of ceramic material is a flame-holder arm.

15. A turbomachine including at least one assembly according to any one of claims 1 to 11.

FIG.1

FIG.2

FIG.3

FIG.4

## FIG.5

## FIG.6

FIG.7

FIG.8

FIG.9A

FIG.9B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5501390 A
- JP H05315463 A